(19) Europäisches Patentamt
European Patent Office
Office européen des brevets

(11) **EP 4 629 307 A1**

(12) **EUROPEAN PATENT APPLICATION**

(43) Date of publication:
**08.10.2025 Bulletin 2025/41**

(21) Application number: **25168006.2**

(22) Date of filing: **02.04.2025**

(51) International Patent Classification (IPC):
*H01M 4/04* (2006.01)    *H01M 10/04* (2006.01)
*H01M 10/0525* (2010.01)    *B30B 3/04* (2006.01)
*B30B 15/26* (2006.01)    *B30B 15/34* (2006.01)

(52) Cooperative Patent Classification (CPC):
**H01M 10/0404; B30B 3/04; B30B 15/26;
B30B 15/34; H01M 4/0435; H01M 10/0525**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **02.04.2024   KR 20240044677**

(71) Applicant: **SAMSUNG SDI CO., LTD.
Yongin-si, Gyeonggi-do 17084 (KR)**

(72) Inventors:
• **KIM, BO HUN
16678 Suwon-si, Gyeonggi-do (KR)**
• **MOON, JEUNG GI
16678 Suwon-si, Gyeonggi-do (KR)**

(74) Representative: **Gulde & Partner
Patent- und Rechtsanwaltskanzlei mbB
Berliner Freiheit 2
10785 Berlin (DE)**

(54) **SECONDARY BATTERY MANUFACTURING APPARATUS**

(57)    Disclosed is a secondary battery manufacturing apparatus for manufacturing high density and/or thin electrode plates. The secondary battery manufacturing apparatus includes: a press roll for rolling an electrode plate. The press roll includes a pair of main rolls having a first diameter and a pair of sub-rolls having a second diameter less than or equal to the first diameter. A conveying unit conveys the electrode plate toward the press roll.

FIG. 7

EP 4 629 307 A1

## Description

### FIELD

The present disclosure relates to a secondary battery manufacturing apparatus that rolls an electrode plate.

### BACKGROUND

A secondary battery can be charged and discharged repeatedly unlike a primary cell that cannot be recharged. Low-capacity secondary batteries are used in small, portable electronic devices, such as smartphones, feature phones, notebook computers, digital cameras, and camcorders, and high-capacity secondary batteries are widely used as power sources for motors in hybrid and electric vehicles and as power storage cells. Such a secondary battery includes an electrode assembly of cathodes and anodes, a case receiving the electrode assembly therein, and electrode terminals connected to the electrode assembly.

The electrode assembly may be formed by stacking electrodes including electrode plates. For example, the electrode assembly is formed by stacking an anode including an anode plate, a cathode including a cathode plate, and a separator interposed between the cathode and the anode.

With scientific advances, secondary batteries are required to have high capacitance. Therefore, there is a need to manufacture an electrode assembly for secondary batteries and an electrode plate used in the electrode assembly with higher precision.

This section is intended only to provide a better understanding of the background of the invention and thus may include information that does not constitute related (or prior) art.

### SUMMARY

Aspects of embodiments provide a secondary battery manufacturing apparatus for rolling an electrode plate with higher precision.

According to some embodiments, a secondary battery manufacturing apparatus forms a high density composite electrode plate.

According to some embodiments, a secondary battery manufacturing apparatus forms an electrode plate free from material wrinkles and/or breakage.

According to some embodiments, a secondary battery manufacturing apparatus forms an electrode plate with a controlled deviation in rolling thickness.

The above and other aspects and features will become apparent from the following description of embodiments.

The present disclosure relates to a secondary battery manufacturing apparatus, which includes: a plurality of press rolls arranged to roll an electrode plate. The press rolls include a pair of main rolls having a first diameter and a pair of sub-rolls having a second diameter less than or equal to the first diameter. The secondary battery manufacturing apparatus further includes a conveying unit configured to convey the electrode plate toward the press rolls.

In a preferred embodiment, each of the pair of main rolls may be placed respectively on the pair sub-rolls and the main rolls may be configured to press the pair of sub-rolls through rotation, and the pair of sub-rolls is configured to press and to roll the electrode plate conveyed to the pair of sub-rolls.

Further preferred, one of the pair of main rolls may be configured to rotate in a first direction and the corresponding one of the pair of sub-rolls may be configured to rotate in a second direction different from the first direction. In other words, each main roll may be configured to rotate and contact the corresponding sub-roll and thus is configured to rotate the sub-roll in opposite (i.e. counter-rotating) direction. The one of the pair of main rolls may be configured to roll in opposite (i.e. counter-rotating) direction to the other main roll.

In another preferred embodiment, the pair of sub-rolls may be configured to perform rolling by pressing the electrode plate while the electrode plate is conveyed toward the pair of sub-rolls. The pair of main rolls may be spaced a predetermined distance apart from the pair of sub-rolls and may be further configured to perform rolling by pressing the electrode plate subjected to rolling by the pair of sub-rolls.

Further preferred, one of the pair of main rolls may be configured to rotate in a first direction and the corresponding one of the pair of sub-rolls rotate in the same direction as the first direction.

Preferably, the first diameter and the second diameter may have a ratio in the range of 1:1 to 20:1.

Further preferred, the first diameter may be in the range of 400 mm to 600 mm and the second diameter may be in the range of 20 mm to 600 mm.

In another preferred embodiment, the secondary battery manufacturing apparatus may further comprise: a processor configured to sense a thickness of the electrode plate and configured to determine at least one of a rolling pressure of the plurality of press rolls or a temperature of the press roll based on at least one of the sensed thickness of the electrode plate or a preset rolling thickness.

Further preferred, the secondary battery manufacturing apparatus may further comprise: a heating unit configured to regulate the temperature of the press rolls, wherein the processor is configured to apply heat to the electrode plate through the heating unit based on the determined temperature of the press rolls.

Further preferred, the processor may further be configured to stepwise increase the temperature of the press rolls to a temperature less than or equal to a predetermined temperature through the heating unit.

Further preferred, the secondary battery manufacturing apparatus may further comprise: a driver configured to regulate a rolling pressure of the press rolls, wherein the processor may be configured to apply pressure to the electrode plate through the driver based on the determined rolling pressure of the press rolls.

In another preferred embodiment, the pair of sub-rolls may comprise a pair of first sub-rolls and a pair of second sub-rolls, a diameter of the pair of first sub-rolls being less than or equal to a diameter of the pair of second sub-rolls.

Further preferred, the pair of first sub-rolls may be spaced a predetermined distance apart from the pair of second sub-rolls and may be configured to perform rolling by pressing an electrode plate conveyed toward the pair of first sub-rolls, and the pair of second sub-rolls may be configured to press the electrode plate subjected to rolling by the pair of first sub-rolls.

In another preferred embodiment, the pair of sub-rolls may form a step between a center portion (center) thereof and a periphery portion (periphery) thereof.

Further preferred, the pair of sub-rolls may have a height gradually increasing from the center portion thereof toward the periphery portion thereof.

According to some embodiments, the secondary battery manufacturing apparatus may manufacture a high density composite electrode plate.

According to some embodiments, the secondary battery manufacturing apparatus may manufacture thin electrode plates.

However, aspects and features of the present disclosure are not limited to those described above, and other aspects and features not mentioned will be clearly understood by those skilled in the art from the detailed description given below.

## BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.

FIG. 1 is a cross-sectional view showing aspects of an exemplary lithium secondary battery according to some embodiments;

FIG.2 is a cross-sectional view showing aspects of an exemplary lithium secondary battery according to some embodiments;

FIG. 3 is a cross-sectional view showing aspects of an exemplary lithium secondary battery according to some embodiments;

FIG. 4 is a cross-sectional view of the exemplary secondary battery of FIG. 3 according to some embodiments;

FIG. 5 is a schematic side view of a secondary battery manufacturing apparatus;

FIG. 6 is a block diagram of a secondary battery manufacturing apparatus according to some embodiments;

FIG. 7 is a schematic side view of a secondary battery manufacturing apparatus according to some embodiments;

FIG. 8 is a schematic side view of a secondary battery manufacturing apparatus according to some embodiments;

FIG. 9 is a schematic side view of a secondary battery manufacturing apparatus according to some embodiments; and

FIG. 10 is a schematic front view of sub-rolls according to some embodiments.

## DETAILED DESCRIPTION

Hereinafter, exemplary embodiments of the present disclosure will be described in detail with reference to the accompanying drawings. However, it should be understood that the following embodiments are provided by way of illustration and the present disclosure is not limited thereto. Accordingly, it should be understood that there may be various equivalents and modifications that can replace or modify the embodiments described herein at the time of filing this application.

When an arbitrary element is referred to as being disposed (or placed or placed) "above" (or "below") or "on" (or "under") a component, it may mean that the arbitrary element is placed in contact with the upper (or lower) surface of the component and may also mean that another component may be interposed between the component and any arbitrary element disposed (or placed or placed) on (or under) the component

Throughout the specification, unless specified otherwise, each element may be singular or plural. In addition, throughout the specification, when "A and/or B" is stated, it means A, B or A and B, unless specified otherwise.

As used herein, "combinations thereof" may refer to mixtures, stacks, composites, copolymers, alloys, blends, and reaction products of components.

Unless otherwise defined herein, particle diameter may refer to an average particle diameter. In addition, the particle diameter means an average particle diameter (D50) that refers to a particle diameter corresponding to 50% by volume in a volume cumulative variation of corresponding particles. The average particle diameter may be measured by any method well known in the art, for example, by a particle size analyzer, a transmission electron microscope image, or a scanning electron microscope image. Alternatively, the average particle diameter (D50) may be measured by counting the number of particles in each particle diameter range using a device employing a dynamic light-scattering method to analyze data, followed by calculating the average particle diameter (D50) based on the analyzed data. Alternatively, the average particle diameter (D50) may be measured by laser diffraction. More specifically, in measurement by laser diffraction, target particles are dispersed in a dispersant, introduced into a commercially available laser diffraction particle analyzer (for example, Microtrac MT 3000), and irradiated with ultrasound waves of about 28 kHz at a power of 60 W, followed by calculating the average particle size (D50) corresponding to 50% by volume in the cumulative volume variation of the particles in the measurement device.

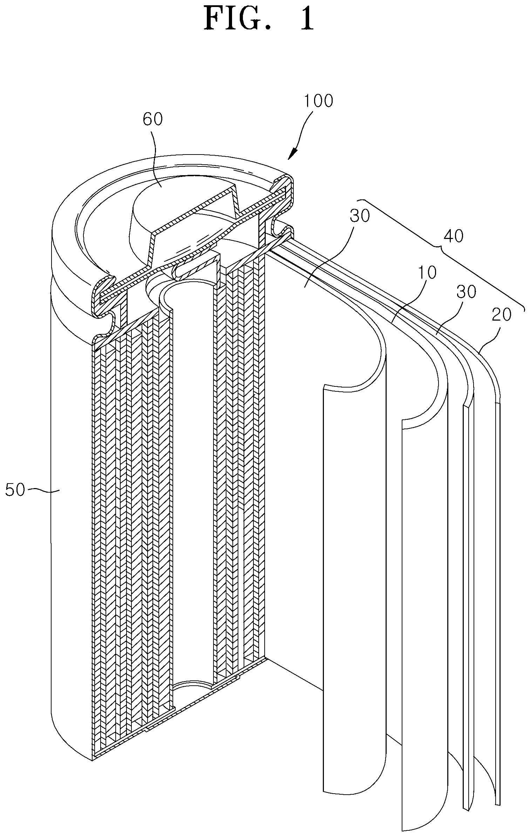

FIG. 1 to FIG. 4 show cross-sectional views of different aspects of exemplary lithium secondary batteries according to some embodiments.

## Lithium secondary battery 100

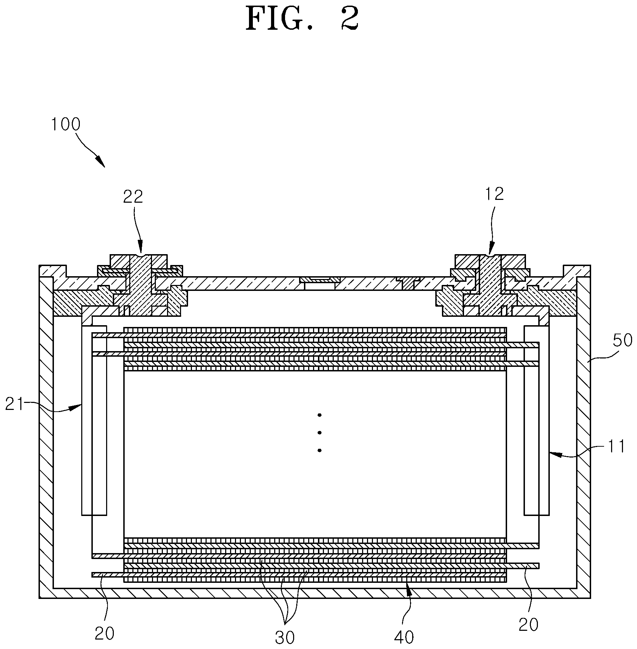

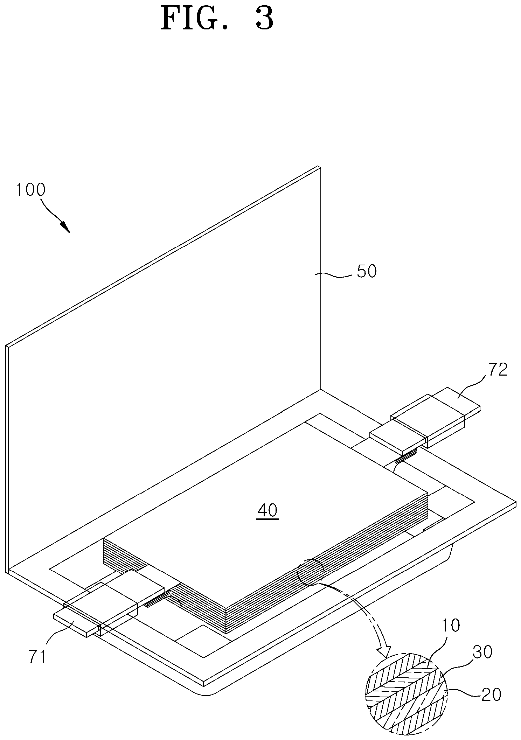

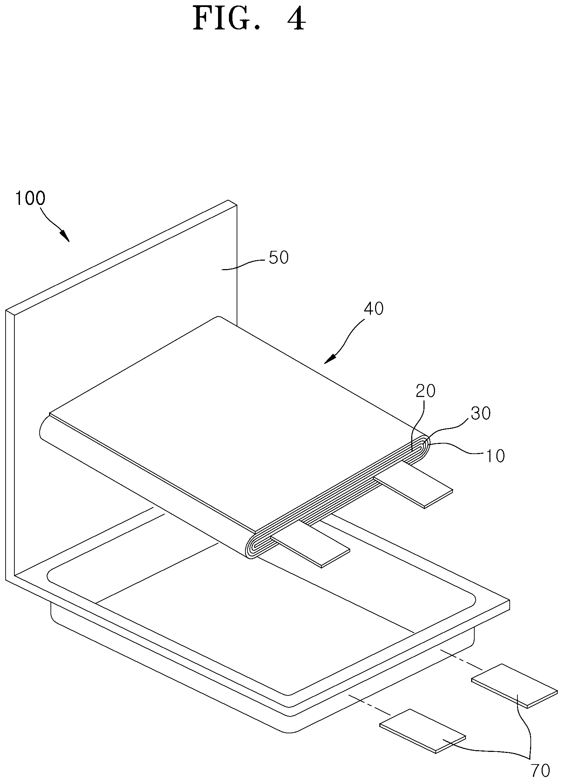

Lithium secondary batteries may be classified into a cylindrical secondary battery, a faceted secondary battery, a pouch type secondary battery, a coin type secondary battery, and the like based on the shapes thereof. FIG. 1 to FIG. 4 are schematic views of exemplary lithium secondary batteries according to some embodiments. FIG. 1 is a cross-sectional view of a cylindrical secondary battery, FIG. 2 is a cross-sectional view of a faceted secondary battery, and FIG. 3 and FIG. 4 are cross-sectional views of a pouch-type secondary battery.

Referring to FIG. 1 to FIG. 4, a lithium secondary battery 100 may include an electrode assembly 40 in which a separator 30 is interposed between a cathode 10 and an anode 20, and a case 50 that receives the electrode assembly 40 therein. The cathode 10, the anode 20, and the separator 30 may be embedded in an electrolyte (not shown). The lithium secondary battery 100 may include a sealing member 60 that seals the case 50, as shown in FIG. 1. In addition, as shown in FIG. 2, the lithium secondary battery 100 may include a cathode lead tab 11, a cathode terminal 12, an anode lead tab 21, and an anode terminal 22. Referring to FIG. 3 and FIG. 4, the lithium secondary battery 100 may include electrode tabs 70, that is, a cathode tab 71 and an anode tab 72, which act as electrical pathways conducting current formed in the electrode assembly 40 to the outside.

## Cathode material

As a cathode material, a compound allowing reversible intercalation and deintercalation of lithium (lithiated intercalation compound) may be used. Specifically, the cathode material may be at least one complex oxide of a metal selected from among cobalt, manganese, nickel and combinations thereof with lithium.

The composite oxide may be a lithium transition metal composite oxide. Specifically, the composite oxide may be a lithium nickel oxide, a lithium cobalt oxide, a lithium manganese oxide, a lithium iron phosphate compound, a cobalt-free nickel-manganese oxide, or a combination thereof.

By way of example, the composite oxide may be a compound represented by any of the following formulas: $Li_aA_{1-b}X_bO_{2-c}O_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}O_\alpha$ ($0.90 \leq a \leq 1.8$, $0 \leq b \leq 0.5$, $0 \leq c \leq 0.5$, $0 < \alpha < 2$); $Li_aNi_bCo_cL^1_{d-}G_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); and $Li_aFePO_4$ ($0.90 \leq a \leq 1.8$).

In the above formulas, A is Ni, Co, Mn, or a combination thereof; X is Al, Ni, Co, Mn, Cr, Fe, Mg, Sr, V, a rare-earth element, or a combination thereof; D is O, F, S, P, or a combination thereof; G is Al, Cr, Mn, Fe, Mg, La, Ce, Sr, V, or a combination thereof; and $L^1$ is Mn, Al, or a combination thereof.

In one embodiment, the cathode material may be a high nickel-content cathode material containing 80 mol% or more, 85 mol% or more, 90 mol% or more, 91 mol% or more, or 94 mol% to 99 mol% of nickel relative to 100 mol% of metal excluding lithium in the lithium transition metal complex oxide. The high nickel-content cathode material can achieve high capacity and thus can be applied to high capacity/high density lithium secondary batteries.

## Cathode 10

The cathode 10 for the lithium secondary battery 100 may include a current collector and a cathode material layer formed on the current collector. The cathode material layer includes a cathode material and may further include a binder and/or a conductive material.

According to some embodiments, the cathode may further include an additive capable of acting as a sacrificial cathode.

The cathode material may be present in an amount of 90 wt% to 99.5 wt% based on 100 wt% of the cathode material layer and each of the binder and the conductive material may be present in an amount of 0.5 wt% to 5 wt% based on 100 wt% of the cathode material layer.

The binder serves to attach cathode material particles to each other while attaching the cathode material to the current collector. The binder may include, for example, polyvinyl alcohol, carboxymethylcellulose, hydroxypropylcellulose, diacetylcellulose, polyvinyl chloride, carboxylated polyvinyl chloride, polyvinyl fluoride, polymers including ethylene oxide, polyvinyl pyrrolidone, polyurethane, polytetrafluoroethylene, polyvinylidene fluoride, polyethylene, polypropylene, styrene-butadiene rubbers, (meth)acrylated styrene-butadiene rubbers, epoxy resins, (meth)acrylic resins, polyester resins, Nylon, and the like, without being limited thereto.

The conductive material serves to impart conductivity to the electrodes and may be any electrically conductive material that does not cause chemical change in cells under construction. The conductive material may include, for example, carbon materials, such as natural graphite, artificial graphite, carbon black, acetylene black, Ketjen black, carbon fiber, carbon nanofibers, carbon nanotubes, and the like; metal-based materials in the form of metal powders or metal fibers containing copper, nickel, aluminum, silver, and the like; conductive polymers, such as polyphenylene derivatives and the like; and mixtures thereof.

The current collector may be Al, without being limited thereto.

## Anode material

The anode material may include a material allowing reversible intercalation/deintercalation of lithium ions, lithium metal, a lithium metal alloy, a material capable of being doped to lithium and de-doped therefrom, or a transition metal oxide.

The material allowing reversible intercalation/deintercalation of lithium ions may include a carbon-based anode material, for example, crystalline carbon, amorphous carbon, or a combination thereof. The crystalline carbon may include, for example, graphite, such as natural graphite or artificial graphite, in amorphous, plate, flake, spherical, or fibrous form, and the amorphous carbon may include, for example, soft carbon, hard carbon, mesoporous pitch carbides, calcined coke, and the like.

The lithium metal alloy may be an alloy of lithium and a metal selected from among Na, K, Rb, Cs, Fr, Be, Mg, Ca, Sr, Si, Sb, Pb, In, Zn, Ba, Ra, Ge, Al and Sn may be used.

The material capable of being doped to lithium and de-doped therefrom may be an Si-based anode material or an Sn-based anode material. The Si-based anode material may be silicon, a silicon-carbon composite, $SiO_x$ ($0<x<2$), Si-Q alloys (where Q is selected from among alkali metals, alkali-earth metals, Group XIII elements, Group XIV elements (excluding Si), Group XV elements, Group XVI elements, transition metals, rare-earth elements, and combinations thereof), or combinations thereof. The Sn-based anode material may be Sn, $SnO_2$, an Sn alloy, or a combination thereof.

The silicon-carbon composite may be a composite of silicon and amorphous carbon. According to one embodiment, the silicon-carbon composite may be prepared in the form of silicon particles having an amorphous carbon coating formed on the surface thereof. For example, the silicon-carbon composite may include secondary particles (cores) composed of primary silicon particles and an amorphous carbon coating layer (shell) formed on the surface of the secondary particle. The amorphous carbon may also be placed between the primary silicon particles such that, for example, the primary silicon particles are coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles, and an amorphous carbon coating layer formed on the core.

The Si-based anode material or the Sn-based anode material may be used in combination with the carbon-based anode material.

## Anode 20

The anode 20 for the lithium secondary battery 100 may include a current collector and an anode material layer formed on the current collector. The anode material layer includes an anode material and may further include a binder and/or a conductive material.

For example, the anode material layer may include 90 wt% to 99 wt% of the anode material, 0.5 wt% to 5 wt% of the binder, and 0 wt% to 5 wt% of the conductive material.

The binder serves to attach the anode material particles to each other while attaching the anode material to the current collector. The binder may be a non-aqueous binder, an aqueous binder, a dry binder, or a combination thereof.

The non-aqueous binder includes polyvinyl chloride, carboxylated polyvinyl chloride, polyvinyl fluoride, ethylene propylene copolymers, polystyrene, polyurethane, polytetrafluoroethylene, polyvinylidene fluoride, polyethylene, polypropylene, polyamideimide, polyimide, or combinations thereof.

The aqueous binder may be selected from the group consisting of styrene-butadiene rubbers, (meth)acrylated styrene-butadiene rubbers, (meth)acrylonitrile-butadiene rubbers, (meth)acrylic rubbers, butyl rubbers, fluorinated rubbers, polyethylene oxide, polyvinylpyrrolidone, polyepichlorohydrin, polyphosphazene, poly(meth)acrylonitrile, ethylene propylene diene copolymers, polyvinyl pyridine, chlorosulfonated polyethylene, latex, polyester resins, (meth)acryl resins, phenol resins, epoxy resins, polyvinyl alcohol, and combinations thereof.

When the aqueous binder is used as the anode binder, a cellulose-based compound capable of imparting viscosity may be further included. The cellulose-based compound may be a mixture of carboxymethylcellulose, hydroxypropyl methylcellulose, methylcellulose, or alkali metal salts thereof. The alkali metal may be Na, K, or Li.

The dry binder may be a fibrous polymeric material and may include, for example, polytetrafluoroethylene, polyvinylidene fluoride, a polyvinylidene fluoride-hexafluoropropylene copolymer, polyethylene oxide, or a combination thereof.

The conductive material serves to impart conductivity to the electrodes and may be any electronically conductive material that does not cause chemical change in cells under construction. Specifically, the conductive material may include, for example, carbon materials, such as natural graphite, artificial graphite, carbon black, acetylene black, Ketjen black, carbon fibers, carbon nanofibers, carbon nanotubes, and the like; metal-based materials in the form of metal powders or metal fibers containing copper, nickel, aluminum, silver, and the like; conductive polymers, such as polyphenylene derivatives and the like; or mixtures thereof.

The anode current collector may be selected from copper foil, nickel foil, stainless steel foil, titanium foil, nickel foam, copper foam, a conductive metal-coated polymer base, and combinations thereof.

## Electrolyte (not shown)

The electrolyte for the lithium secondary battery 100 may include a non-aqueous organic solvent and a lithium salt.

The non-aqueous organic solvent acts as a medium through which ions involved in electrochemical reaction of a cell can move.

The non-aqueous organic solvent may be a carbonate-based solvent, an ester-based solvent, an ether-based solvent, a ketone-based solvent, an alcohol-based solvent, a non-amphoteric solvent, or a combination thereof.

The carbonate-based solvents may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), and butylene carbonate (BC).

The ester-based solvents may include methyl acetate, ethyl acetate, n-propyl acetate, dimethyl acetate, methyl propionate, ethyl propionate, decanolide, mevalonolactone, valerolactone, caprolactone, and the like.

The ether-based solvents may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone and the like. The alcohol-based solvents may include ethyl alcohol, isopropyl alcohol, and the like, and the non-amphoteric solvent may include nitriles, such as R-CN (where R is a straight, branched or cyclic hydrocarbon group having 2 to 20 carbon atoms and may include double bonds, aromatic rings, or ether groups); amides, such as dimethylformamide; dioxolanes, such as 1,3-dioxolane, 1,4-dioxolane, and the like; sulfolane; and the like.

The non-aqueous organic solvent may be used alone or as a mixture thereof.

In use of the carbonate-based solvent, a mixture of a cyclic carbonate and a chained carbonate may be used, and the cyclic carbonate and the chained carbonate may be mixed in a volume ratio of 1:1 to 1:9.

The lithium salt is a substance that is soluble in an organic solvent and serves as a source of lithium ions in a battery, enabling operation of a basic lithium secondary battery while facilitating transfer of the lithium ions between the cathode and the anode. Examples of the lithium salts may include at least one selected from among $LiPF_6$, $LiBF_4$, $LiSbF_6$, $LiAsF_6$, $LiClO_4$, $LiAlO_2$, $LiAlCl_4$, $LiPO_2F_2$, $LiCl$, $LiI$, $LiN(SO_3C_2F_5)_2$, $Li(FSO_2)_2N$ (lithium bis(fluorosulfonyl)imide (LiFSI), $LiC_4F_9SO_3$, $LiN(C_xF_{2x+1}SO_2)(C_yF_{2y+1}SO_2)$ (where x and y are integers of 1 to 20), lithium trifluoromethane sulfonate, lithium tetrafluoroethane sulfonate, lithium difluorobis(oxalato)phosphate (LiDFOB), and lithium bis(oxalato)borate (LiBOB).

## Separator 30

Depending on the type of lithium secondary battery 100, a separator 30 may be interposed between the cathode 10 and the anode 20. For such a separator 30, polyethylene, polypropylene, polyvinylidene fluoride, or at least two layers thereof may be used as well as mixed layers, such as a polyethylene/polypropylene bilayer separator, a polyethylene/-polypropylene/polyethylene trilayer separator, a polyethylene/polyethylene/polypropylene trilayer separator, and the like.

The separator 30 may include a porous substrate and a coating layer that includes an organic material, an inorganic material, or a combination thereof on one or both surfaces of the porous substrate.

The porous substrate may be a polymer layer formed of a polymer selected from among polyolefins, such as polyethylene polypropylene, and the like, polyesters, such as polyethylene terephthalate, polybutylene terephthalate, and the like, polyacetal, polyamides, polyimides, polycarbonates, polyether ketones, polyarylether ketones, polyetherimides, polyamideimides, polybenzimidazole, polyethersulfone, polyphenylene oxides, cyclic olefin copolymers, polyphenylene sulfides, polyethylene naphthalate, glass fiber, Teflon, and polytetrafluoroethylene, copolymers thereof, or mixtures thereof.

The organic material may include a polyvinylidene fluoride polymer or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and combinations thereof, without being limited thereto.

The organic material and the inorganic material may be present in a mixed state in one coating layer or may be present in the form of a stack structure of a coating layer including the organic material and a coating layer including the inorganic material.

As described with reference to FIGs. 1 to 4, exemplary secondary batteries 100 may include the electrode assembly 40. The electrode assembly 40 may be formed by stacking the cathode 10, the anode 20, and the separator 30 interposed between the cathode 10 and the anode 20. The cathode 10 may be formed by depositing slurries comprising a cathode active material onto a base and/or by attaching a freestanding film comprising a cathode active material thereto. The anode 20 may be formed by depositing slurries comprising an anode active material onto a base and/or by attaching a freestanding film comprising an anode active material thereto. Such a slurry or free-standing film may be referred to as a composite layer.

Here, the cathode 10 and/or the anode 20 may be referred to as an "electrode". In addition, the base and the composite layer formed on the base may be referred to as an "electrode plate". Thus, the electrode plate includes a cathode electrode plate forming the cathode 10 and/or an anode electrode plate forming the anode 20.

Such an electrode plate may be rolled to a suitable thickness and/or density, with the composite layer formed on the base. Alternatively, the electrode plate may be subjected to a rolling process to press the composite layer on the base. Hereinafter, as an apparatus for rolling an electrode plate, a secondary battery manufacturing apparatus according to an embodiment of the present invention will be described in detail.

Herein, the electrode plate may include any type of structure, such as a plate, a thick plate, a thin plate, a film, a sheet, or the like, which has a greater length in thickness and longitudinal directions thereof than in a height direction thereof. The electrode plate may include, for example, an electrode sheet.

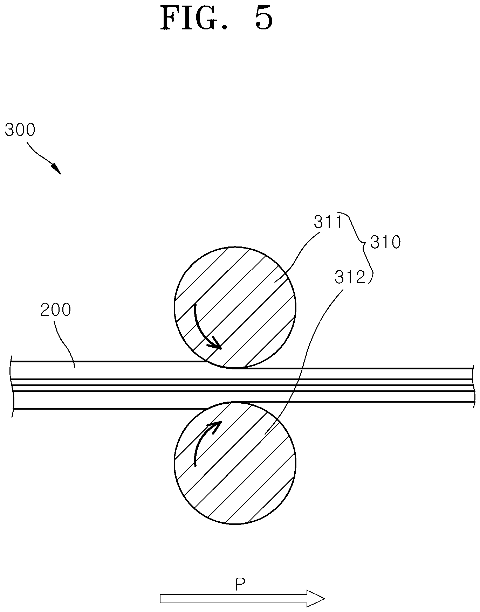

FIG. 5 is a schematic side view of an exemplary secondary battery manufacturing apparatus 300.

In FIG. 5, reference numeral 200 indicates an electrode plate and reference numeral 300 indicates the exemplary secondary battery manufacturing apparatus. In addition, P indicates a traveling direction of the electrode plate 200.

As shown, the secondary battery manufacturing apparatus 300 includes a conveying unit for conveying the electrode plate 200. The press rolls 310 performing rolling on the electrode plate 200 conveyed by the conveying unit in the direction P according to the exemplary embodiment shown in FIG. 5.

The conveying unit convey the electro plate 200 toward the press rolls 310. And/or the electro plate 200 may pass the press rolls by the conveying unit.

The press rolls 310 are arranged in a pair. Each of the press rolls 310 may apply pressure to the electrode plate 200 through rotation. For example, the press rolls 310 perform rolling on the electrode plate 200 passing through a gap between the pair of press rolls 310. As the electrode plate 200 is rolled by the press rolls 310, the electrode plate 200 may have a thinner thickness after rolling than before rolling.

Specifically, the press rolls 310 include a first press roll 311 and a second press roll 312. The first press roll 311 is disposed on one surface of the electrode plate 200 to press the one surface of the electrode plate 200. For example, the first press roll 311 may press the one surface of the electrode plate 200 while rotating in a first direction (counterclockwise in FIG. 5). The one surface of the electrode plate 200 is, for example in FIG. 5, an upper surface of the electrode plate 200. The second press roll 312 may be disposed on the other surface of the electrode plate 200 to press the other surface of the electrode plate 200. For example, the second press roll 312 may press the other surface of the electrode plate 200 while rotating in a second direction (clockwise in FIG. 5). The first direction may be opposite to the second direction as shown in FIG.5. The rotational first direction and second direction of the press rolls 310 may be associated with the same lateral direction as the traveling direction P of the electrode plate 200 at some points. The other surface of the electrode plate 200 is, for example, a lower surface of the electrode plate 200, as shown in FIG. 5. The one surface of the electrode plate 200 and the other surface of the electrode plate 200 may face in opposite directions.

The press rolls 310 may apply force to the electrode plate 200 in a direction perpendicular to the traveling direction P of the electrode plate 200. For example, according to the arrangement in FIG. 5, the first press roll 311 may apply rolling pressure downward, toward the upper surface of the electrode plate 200 in the direction perpendicular to the traveling direction P of the electrode plate 200, and the second press roll 312 may apply rolling pressure upward, toward the lower surface of the electrode plate 200 in the direction perpendicular to the traveling direction P of the electrode plate 200. The rolling pressures applied to the electrode plate 200 by the first press roll 311 and the second press roll 312 may be opposite in direction and equal in magnitude (or similar values recognized to be in the same range).

With this structure, the secondary battery manufacturing apparatus 300 may roll the electrode plate 200. Accordingly, the secondary battery manufacturing apparatus 300 can ensure that the composite layer is pressed onto the base and/or that the electrode plate 200 has a suitable density and/or thickness.

However, when the electrode plate 200 is rolled through the pair of press rolls 310, there can be a problem in that the rolling pressure is relatively weak. As a result, it may be difficult to form the electrode plate 200 into a high density composite plate and/or a thin film. For example, in manufacture of a high density composite electrode plate, the electrode plate may not be formed to a desired thickness. In addition, in manufacture of a thin electrode plate, the electrode plate may suffer from wrinkling in the base and/or disconnection of the electrode plate.

Some these issues may be resolved by changing the shape of the press rolls 310 or by repeating rolling on the electrode plate 200 at least twice. However, this approach may create problems, such as a deviation in rolling thickness and the like.

The following is a description of a secondary battery manufacturing apparatus 400 according to some embodiments.

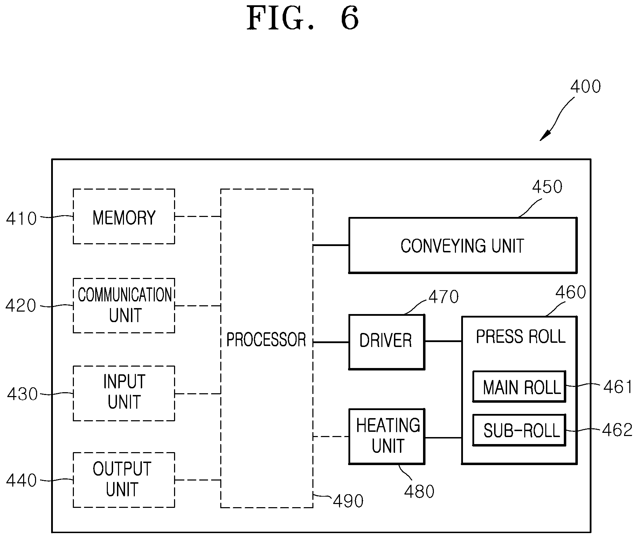

FIG. 6 is a block diagram of an exemplary secondary battery manufacturing apparatus 400 according to some embodiments.

The secondary battery manufacturing apparatus 400 may manufacture a high density composite electrode plate with a desired thickness. The secondary battery manufacturing apparatus 400 may additionally manufacture a thin electrode plate in which occurrence of wrinkling and/or breakage is reduced or prevented.

To this end, the secondary battery manufacturing apparatus 400 may include press rolls 460 including a main roll 461 and a sub-roll 462. The secondary battery manufacturing apparatus 400 may further include a conveying unit 450 that conveys an electrode plate 200 towards the press rolls 460. The secondary battery manufacturing apparatus 400 may further include a driver 470, a heating unit 480, and/or a processor 490. In addition, the secondary battery manufacturing apparatus 400 may further include at least one of a memory 410, a communication unit 420, an input unit 430, and an output unit 440. However, the electrode manufacturing apparatus 400 is not limited to the components shown in FIG. 6 and may include only some of the components shown in FIG. 6 and/or may include additional components in addition to the components shown in FIG. 6. The components of the exemplary electrode manufacturing apparatus 400 shown in FIG. 6 are described below.

The memory 410 may store instructions required to operate the secondary battery manufacturing apparatus 400. The instructions include, for example, instructions to set a rolling temperature of the press rolls and/or a rolling pressure of the press rolls, and data required for operation of each component included in the secondary battery manufacturing apparatus 400.

The memory 410 includes, for example, volatile memory or non-volatile memory. The memory 410 may include, for example, a CPU, cache, DRAM, persistent memory, flash SSD, HDD, CD/DVD, cloud server, and the like

The communication unit 420 may enable communication among components of the secondary battery manufacturing apparatus 400 or between the secondary battery manufacturing apparatus 400 and an external server or an external device. The communication unit 420 may perform wireless or wired communication. The communication unit 420 may perform short-range or long-range communication. The communication unit 420 implements, for example, a wired local area network (LAN), a wireless LAN (WLAN), and the like. The communication unit 320 employs, for example, Bluetooth, Zigbee, radio frequency identification (RFID), Wi-Fi, 5G, LoRa, and the like

The input unit 430 may receive user commands from a user. The input unit 430 may include, for example, a mechanical input device (for example, a keyboard, a mouse, or the like), a touch panel, or the like.

The output unit 440 may output data generated by the inner components of the secondary battery manufacturing apparatus 400 and/or external data received by the secondary battery manufacturing apparatus 400. The data may include information about thickness, density, weight, humidity, and the like before and after rolling of the electrode plate 200 by the secondary battery manufacturing apparatus 400. The output unit 440 includes, for example, a display to output visual data, a speaker to output auditory data, and a haptic module to output tactile data. However, it should be understood that the output unit 440 is not limited thereto and may include any type of output unit capable of outputting data.

The conveying unit 450 may convey the electrode plate 200 between the components of the secondary battery manufacturing apparatus 400. For example, the conveying unit 450 conveys the electrode plate 200, which is introduced into the secondary battery manufacturing apparatus 400, towards the press roll 460. Additionally or alternatively, the conveying unit 450 conveys the electrode plate 200 subjected to rolling by the press roll 460 towards other components or the outside of the secondary battery manufacturing apparatus 400. Herein, any description of the conveying unit 450 that is the same or similar to the description of the conveying unit of FIG. 5 is omitted.

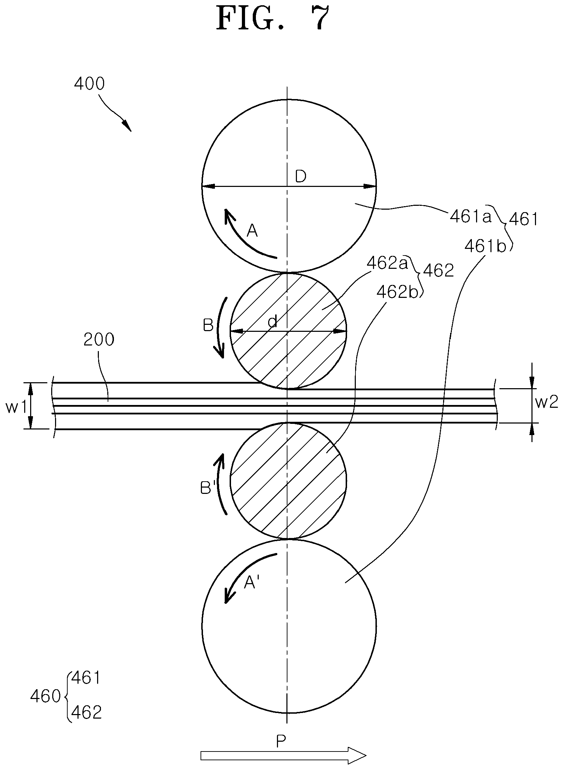

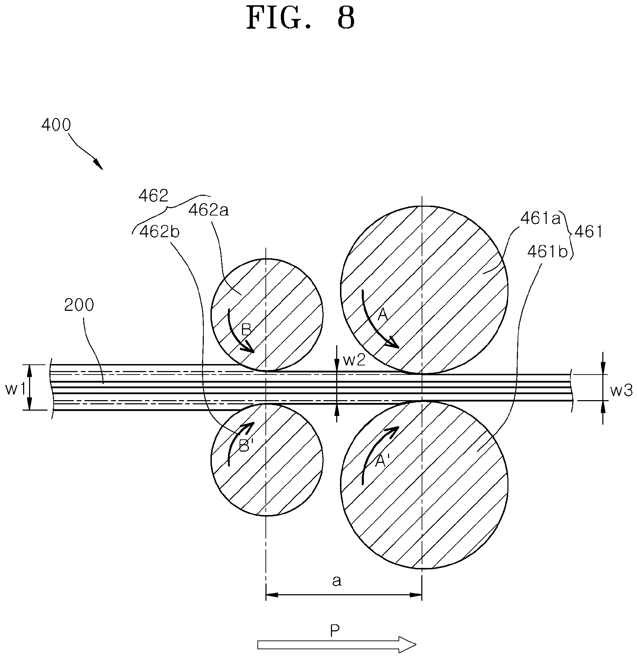

The press roll 460 (i.e., set of rollers) performs rolling on the electrode plate 200. The press roll 460 may include a plurality of pairs of rolls with substantially the same diameter per pair. For example, as shown in FIGs. 6-9, the press roll 460 may include two pairs 461, 462 of rolls. The description of the press rolls 460 is generally the same as or similar to the description of the press rolls 310 shown in FIG. 5. However, the press roll 460, according to some embodiments, includes the plurality of pairs of rolls, shown as two pairs of rolls 461, 462 in FIGs. 7 and 8. The inventors have recognized that a plurality of pairs of rolls may solve problems caused by the press roll 310 of FIG. 5. Specifically, the press roll 460 may include a pair of main rolls 461 and at least one pair of sub-rolls 462.

The pair of main rolls 461 includes main rolls 461a, 461b having a first diameter.

The pair of sub-rolls 462 includes sub-rolls 462a, 462b having a second diameter. The second diameter is less than or equal to the first diameter.

The driver 470 controls operation of the pair of main rolls 461 and the pair of sub-rolls 462 of the press roll 460. For example, the driver 470 controls a rotational speed of the pairs of rolls 461, 462 of the press roll 460 and/or a rolling pressure of the pairs of rolls 461, 462 of the press roll 460. For example, the driver 470 may control the rotational speed of the pairs of rolls 461, 462 of the press roll 460 by controlling a rotational speed at which rotational axes of the pairs of rolls 461, 462 of the press rolls 460 rotate. Alternatively, for example, the driver 470 may control the rolling pressure of the pairs of rolls 461, 462 of the press roll 460 by controlling a distance between the rotational axes of the pairs of rolls 461, 462 of the press roll 460.

The heating unit 480 controls the temperature of the pairs of rolls 461, 462 of the press roll 460. For example, the heating unit 480 may indirectly allow heat to be transferred from the press rolls 460 to the electrode plate 200. To this end, the heating unit 480 may include, for example, an induction unit. Alternatively, for example, the heating unit 480 may allow heat to be directly transferred from the press roll 460 to the electrode plate 200. To this end, the heating unit 480 may include, for example, a heater. Alternatively, the heating unit 480 may allow heat to be transferred from the press roll 460 to the electrode plate 200, for example, via laser beams.

The processor 490 may control all or some of the components in the secondary battery manufacturing apparatus 400. The processor 490 may be embedded in the secondary battery manufacturing apparatus 400. Alternatively, the processor 490 may be placed outside the secondary battery manufacturing apparatus 400 and may control each of the components of the secondary battery manufacturing apparatus 400 through the communication unit 420.

The processor 490 may include, for example, a central processing unit (CPU), a microprocessor unit (MPU), a microcontroller unit (MCU), a graphics processing unit (GPU), a digital signal processor (DSP), a floating-point unit (FPU), an application specific integrated circuit (ASIC), a field programmable gate array (FPGA), and the like.

As such, the secondary battery manufacturing apparatus 400 according to an exemplary embodiment includes the plurality of pairs of press rolls 461, 462 to manufacture high density composite electrode plates and/or thin electrode plates. In the following description, such a pair of press rolls 461, 462 is described in detail by way of example.

FIG. 7 is a schematic side view of a secondary battery manufacturing apparatus 400 according to some embodiments.

As described above, the secondary battery manufacturing apparatus 400 may include the pair of main rolls 461 and the pair of sub-rolls 462.

Referring to FIG. 7, the pair of main rolls 461 may be respectively placed on the pair of sub-rolls 462. The pair of main rolls 461 respectively press the pair of sub-rolls 462 while rotating thereon. The pair of sub-rolls 462 press and roll the electrode plate 200 conveyed to the pair of sub-rolls 462 through rotation of the pair of sub-rolls 462. Details of the pair of main rolls 461 and the pair of sub-rolls 462 are provided.

The pair of main rolls 461 include, for example, an upper main roll 461a and a lower main roll 461b. The pair of sub-rolls 462 include, for example, an upper sub-roll 462a and a lower sub-roll 462b.

Each of the pair of main rolls 461 may apply pressure respectively to the pair of sub-rolls 462 through rotation. To this end, for example, the upper main roll 461a is placed on the upper sub-roll 462a. That is, the upper main roll 461a may directly contact the upper sub-roll 462a. Further, for example, the lower main roll 461b is placed on the lower sub-roll 462b. That is, the lower main roll 461b may directly contact the upper sub-roll 462b. Here, "on" refers to a direction away from the electrode plate 200. The upper sub-roll 462a and the lower sub-roll 462b may be disposed between the upper main roll 461a and the lower main roll 461b. The rotation axes of the pair of main rolls 461 and the pair of sub-rolls 462 may be placed side by side in a direction (e.g., vertical in FIG. 7) perpendicular to the traveling direction P of the electrode plate 200. That is, in the direction perpendicular to the traveling direction P of the electrode plate 200, the lower main roll 461b, the lower sub-roll 462b, the upper sub-roll 462a, and the upper main roll 461a may be placed side by side (e.g., along a vertical line in FIG. 7).

The pair of main rolls 461 may have a first diameter D and the pair of sub-rolls 462 may have a second diameter d. The second diameter d may be less than or equal to the first diameter D. For example, the first diameter D and the second diameter d may be set in a ratio of 1:1 to 20:1. For example, the first diameter D may be in the range of 400 mm to 600 mm and the second diameter d may be in the range of 20 mm to 600 mm. With this structure, the pair of main rolls 461 can effectively transmit force to the pair of sub-rolls 462 and/or the pair of sub-rolls 462 can effectively press the electrode plate 200. In other words, the press rolls (462a, 462b) adapted to transmit force directly to the electrode plate 200 have the same size as or a smaller size than the press rolls (461a, 461b) adapted to transmit force indirectly to the electrode plate 200, whereby the electrode plate 200 can be rolled more uniformly and effectively.

Each of the pair of main rolls 461 rotate in a first direction A, A'. In addition, each of the pair of sub-rolls 462 rotate in a second direction B, B' different from the first direction A, A'. For example, when the first direction A is the clockwise direction, the second direction B is the counterclockwise direction. Accordingly, each of the pair of main rolls 461 can press one of the pair of sub-rolls 462 adjacent and/or adjoining the pair of main rolls 461.

The pair of sub-rolls 462 may rotate in the same direction as the traveling direction P of the electrode plate 200 in a region adjoining the electrode plate 200. Accordingly, the pair of sub-rolls 462 can press and roll the electrode plate 200.

The upper rolls (461a, 462a) are disposed symmetrical to the lower rolls (461b, 462b) relative to the electrode plate 200. For example, when the upper main roll 461a rotates in the first direction A, the lower main roll 461b rotates in an opposite direction A' to the first direction A. Further, when the upper sub-roll 462a rotates in the second direction B, the lower sub-roll 462b rotates in an opposite direction B' to the second direction B. Thus, the press roll 460 can effectively press and roll upper and lower surfaces of the electrode plate 200 at the same time.

The electrode plate 200 may be reduced in thickness by rolling. For example, the electrode plate 200 may have a first thickness w1 before rolling and a second thickness w2 after rolling. The first thickness W1 is greater than the second thickness W2.

As such, the secondary battery manufacturing apparatus 400 according to the embodiment can apply high force per rolling area to the electrode plate 200. Thus, the secondary battery manufacturing apparatus 400 according to the embodiment enables the electrode plate 200 to be stably formed into a high density composite plate and/or a thin film through rolling once.

FIG. 8 is a schematic side view of a secondary battery manufacturing apparatus 400 according to some embodiments.

As described above, the secondary battery manufacturing apparatus 400 may include a pair of main rolls 461 and a pair of sub-rolls 462.

Referring to FIG. 8, the pair of main rolls 461 are spaced a predetermined distance apart from the pair of sub-rolls 462. The pair of sub-rolls 462 press and roll the electrode plate 200 conveyed to the pair of sub-rolls 462 through rotation of the pair of sub-rolls 462. The pair of main rolls 461 further performs rolling on the electrode plate 200 by pressing the electrode plate 200 that has been rolled by the pair of sub-rolls 462 through rotation. Details of this operation will hereinafter be described. However, the same or similar features of the press roll 460 as those described with reference to FIG. 7 are omitted.

The pair of main rolls 461 includes, for example, an upper main roll 461a and a lower main roll 461b. In addition, the pair of sub-rolls 462 includes, for example, an upper sub-roll 462a and a lower sub-roll 462b.

The pair of main rolls 461 and the pair of sub-rolls 462 may be arranged in the traveling direction P of the electrode plate 200. For example, the upper sub-roll 462a and the upper main roll 461a may be disposed side by side so as to adjoin the upper surface of the electrode plate 200. In addition, the lower sub-roll 462b and the lower main roll 461b may be disposed side by side so as to adjoin the lower surface of the electrode plate 200. Here, the upper main roll 461a and the lower main roll 461b are symmetrically disposed in a direction perpendicular to the traveling direction P of the electrode plate 200. Accordingly, the upper main roll 461a and the lower main roll 461b can simultaneously press the upper and lower surfaces of the electrode plate 200, respectively. Further, the upper sub-roll 462a and the lower sub-roll 462b are symmetrically disposed in the direction perpendicular to the traveling direction P of the electrode plate 200. Accordingly, the upper sub-roll 462a and the lower sub-roll 462b can simultaneously press the upper surface and the lower surface of the electrode plate 200, respectively.

In the traveling direction P of the electrode plate 200, the pair of sub-rolls 462 may be placed upstream of the pair of main rolls 461. In this arrangement, the electrode plate 200 may be rolled by the pair of sub-rolls 462 and then rolled again by the pair of main rolls 461. For example, the electrode plate 200 may have a first thickness w1 prior to rolling. The electrode plate 200 may be rolled to a second thickness w2 by the pair of sub-rolls 462. Here, the second thickness w2 is less than the first thickness w1. It should be understood that the first thickness w1 and the second thickness w2 are set for convenience of description and may be the same as or different from the first thickness w1 and the second thickness w2 described in FIG. 7. The electrode plate 200 may be rolled to a third thickness w3 by the pair of main rolls 461.

The pair of main rolls 461 may have a first diameter D and the pair of sub-rolls 462 may have a second diameter d. The second diameter d may be less than or equal to the first diameter D. Preferably, the second diameter d may be less than the first diameter D. For example, the first diameter D and the second diameter d may be set in a ratio of 1:1 to 20:1, preferably 2:1 to 20:1. For example, the first diameter D may be in the range of 100 mm to 600 mm, preferably 400 mm to 600 mm and the second diameter d may be in the range of 20 mm to 600 mm. Preferably, the first diameter D may be in the range of 100 mm to 600 mm and the second diameter d may be in the range of 20 mm to 550 mm, more preferably 25 mm to 390 mm, even more preferably 25 mm to 100 mm, even more preferably 25 mm to 90 mm. As such, the press rolls adapted to transmit force to the electrode plate 200 earlier have the same size as or a smaller size than the press rolls adapted to transmit force to the electrode plate 200 later, whereby the electrode plate 200 can be rolled more uniformly and effectively.

As shown in Fig. 8, the pair of main rolls 461 rotate in the first direction A, A'. In addition, the pair of sub-rolls 462 rotate in the second direction B B', which is respectively the same as the first direction A, A'. For example, when the first direction A is the clockwise direction, the second direction B is also the clockwise direction.

In a region where the rolls of the press roll 460 adjoin the electrode plate 200, the first direction A, A' and the second direction B, B' may be the same as the traveling direction P of the electrode plate 200. As a result, the pair of sub-rolls 462 can roll the electrode plate 200 while pressing the electrode plate 200.

Accordingly, the pair of sub-rolls 462 and the pair of main rolls 461 can sequentially roll the electrode plate 200 without interfering with conveyance of the electrode plate 200.

The upper rolls 461a, 462a are disposed symmetrical to the lower rolls 461b, 462b relative to the electrode plate 200. For example, when the upper main roll 461a rotates in the first direction A, the lower main roll 461b rotates in an opposite direction A' to the first direction A. In addition, for example, when the upper sub-roll 462a rotates in the second direction B, the lower sub-roll 462b rotates in an opposite direction B' to the second direction B. Thus, the press roll 460 can effectively press and roll the upper and lower surfaces of the electrode plate 200 at the same time.

As such, the secondary battery manufacturing apparatus 400 according to the exemplary embodiment can apply high force per rolling area to the electrode plate 200. Thus, the secondary battery manufacturing apparatus 400 according to the exemplary embodiment ensures that the electrode plate 200 can be stably formed into a high density composite plate and/or a thin film.

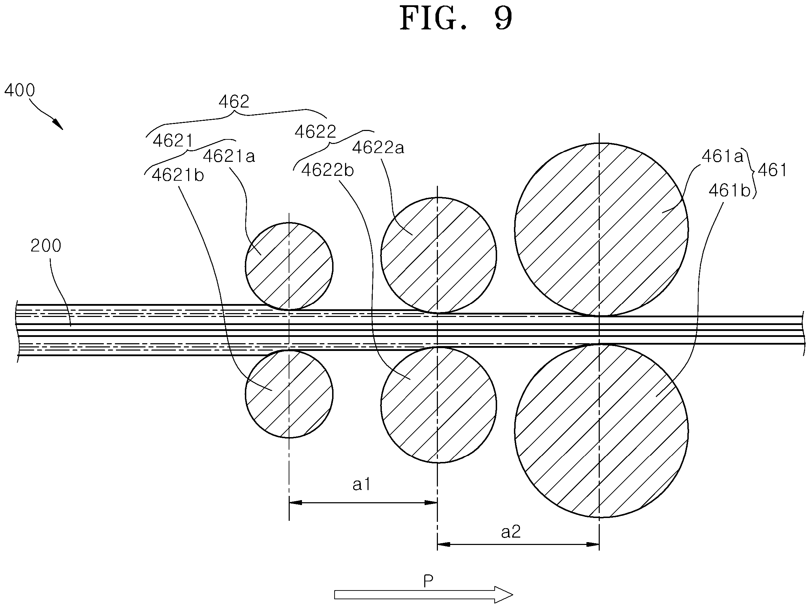

FIG. 9 is a schematic side view of a secondary battery manufacturing apparatus 400 according to some embodiments.

Referring to FIG. 9, the secondary battery manufacturing apparatus 400 described in FIG. 6 to FIG. 8 will be described with more examples.

Referring to FIG. 9, the pair of sub-rolls include a pair of first sub-rolls 4621 and a pair of second sub-rolls 4622. The first sub-rolls 4621 have the same diameter as or a smaller diameter than the second sub-rolls 4622.

The pair of first sub-rolls 4621 are spaced a predetermined distance apart from the second pair of sub-rolls 4622. The pair of first sub-rolls 4621 perform rolling by pressing the electrode plate 200 conveyed to the press rolls 460. The second pair of sub-rolls 4622 press the electrode plate 200 subjected to rolling by the first pair of sub-rolls 4621.

A relationship between the pair of first sub-rolls 4621 and the pair of second sub-rolls 4622 is the same or similar to the relationship between the pair of sub-rolls 462 and the pair of main rolls 361 described in FIG. 8.

For example, as shown in FIG. 9, the pair of sub-rolls 462 and the pair of main rolls 461 may be disposed side by side in the traveling direction P of the electrode plate 200. In this arrangement, the pairs of sub-rolls 462 may include at least two pairs of sub-rolls 462. Here, a pair of main rolls 461 may be placed downstream of the at least two pairs of sub-rolls 462 in the traveling direction P of the electrode plate 200. The size of the rolls of the press roll 460 may be constant and/or gradually increase in the traveling direction P of the electrode plate 200.

Alternatively, for example, as shown in FIG. 9, at least a portion of the pairs of sub-rolls 462 and the pair of main rolls 461 may be disposed perpendicular to the traveling direction P of the electrode plate 200. According to some embodiments, the pairs of sub-rolls 462 may include at least two pairs of sub-rolls 462. The pair of main rolls 461 may be disposed downstream of a pair of sub-rolls 462 that is the most posterior of the at least two pairs of sub-rolls 462 in the traveling direction P of the electrode plate 200. This arrangement may be realized through a combination of the embodiments described with reference to FIGs. 7 and 8. In this arrangement, the size of the rolls 461, 462 of the press roll 460 may be constant and/or gradually increase in the traveling direction P of the electrode plate 200. Alternatively, the size of the rolls 461, 462 of the press roll 460 may be constant and/or gradually increase with increasing distance from the electrode plate 200 in the direction perpendicular to the traveling direction P of the electrode plate 200.

FIG. 9 shows the pairs of sub-rolls 462 including two pairs of sub-rolls 4621, 4622. However, it should be understood that the pairs of sub-rolls 462 according to embodiments of the disclosure may include at least one pair of sub-rolls and the number of pairs of sub-rolls is not particularly limited.

As such, the secondary battery manufacturing apparatus 400 according to some embodiments may ensure that the electrode plate 200 can be stably formed to a high density composite plate and/or a thin film through a pair of main rolls 461 and at least two pairs of sub-rolls 462.

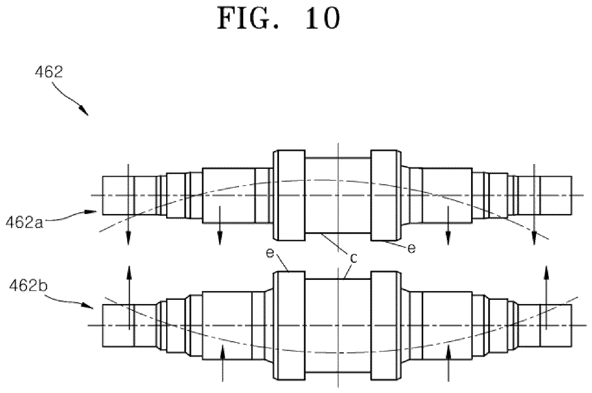

FIG. 10 is a schematic front view of a pair of sub-rolls 462 according to some embodiments.

Referring to FIG. 10, a pair of sub-rolls 462 according to the embodiments described with reference to FIGs. 6 to 9 are described.

Referring to FIG. 10, each among the pair of the sub-rolls 462 includes a center portion c and a periphery portion e. The periphery portion e is placed at both sides of the center portion c. The center portion c and the periphery portion e formed at both sides of the center portion c may be placed side by side in the direction perpendicular to the traveling direction P of the electrode plate 200.

The center portion c and the periphery portion e may form a step therebetween.

For example, referring to FIG. 10, the center portion c may have a lower height than the periphery portion e. Or in other words, the center portion c may have a smaller diameter than the diameter of the periphery portion e. Thus, the pair of sub-roll 462 may form a recess at the center portion c.

Alternatively, unlike the structure shown in FIG. 10, the center portion c may have a greater height than the periphery portion e. Or in other words, the center portion c may have a larger diameter than the diameter of the periphery portion e. Thus, the pair of sub-roll 462 may form a convex portion at the center portion c.

As such, the pair of sub-rolls 462 may be formed with a step corresponding to a coating thickness of the electrode plate 200 between the center portion c and the periphery portion e. Unlike the pair of sub-rolls 462, the pair of main rolls 461 may be evenly formed without a step. With this structure, the secondary battery manufacturing apparatus 400 according to some embodiments can improve thickness deviation on the rolled electrode plate 200.

As illustrated in FIG. 6, the secondary battery manufacturing apparatus 400 according to some embodiments may further include the driver 470, the heating unit 480, and/or the processor 490. In addition, although not shown in FIG. 6, the secondary battery manufacturing apparatus 400 may further include a sensor for sensing the thickness of the electrode plate 200.

The processor 490 may sense the thickness of the electrode plate 200 through the sensor. For example, the processor 490 may sense a thickness w1 of the electrode plate 200 prior to rolling. Based on the sensed thickness of the electrode plate 200 and/or rolled thicknesses stored in the memory 410, the processor 490 may determine at least one of the rolling pressure of the press roll 460 and the rolling temperature of the press roll 460.

The processor 490 may apply pressure to the electrode plate 200 through the driver 470 based on the determined rolling pressure of the rolls of the press roll 460. For example, the processor 490 may decrease the rolling pressure by increasing the distance between the pair of press rolls 461, 462 or may increase the rolling pressure by decreasing the distance between the pair of press rolls 461, 462.

The processor 490 may apply heat to the electrode plate 200 through the heating unit 480 based on the determined temperature of the press roll. As a result, the secondary battery manufacturing apparatus 400 can improve rolling effects on the electrode plate 200. In addition, the secondary battery manufacturing apparatus 400 can improve temperature distribution over the press rolls 460.

The processor 490 may stepwise increase the temperature of the press rolls 460 to a temperature less than or equal to a predetermined temperature through the heating unit 480. Here, the predetermined temperature is a temperature at which properties of the electrode plate 200 do not change. For example, the processor 490 may sequentially increase the temperature of the press rolls 460 to room temperature, 45°C, 70°C, and 110°C. As such, the secondary battery manufacturing apparatus 400 may stepwise increase the temperature of the press rolls 460 to allow the base of the electrode plate 200 rolled by the press rolls 460 to be more efficiently stretched and/or to reduce stress on the electrode plate 200.

Here, the processor 490 may control the shape, temperature and/or rolling pressure of the pair of main rolls 461 and the pair of sub-rolls 462 to be the same or different from each other. As such, the secondary battery manufacturing apparatus 400 according to some embodiments may minimize damage to the electrode plate 200 during rolling by controlling the shape, temperature and/or rolling pressure of the pair of main rolls 461 and the pair of sub-rolls 462 to be the same or different from each other.

Weight (force) per rolling area of the secondary battery manufacturing apparatus 400 according to some exemplary embodiments are described.

Conditions of press rolls used in the experiment are shown below. Only the load (weight) of the rolls of the press roll 460 are calculated as a factor excluding the effects of the rolling speed of the press rolls 460.

(1) Specific gravity of iron in press roll 460: 7.874 $g/cm^2$ at room temperature

(2) Size (volume) of press roll 460: Table 1 shows the sizes of the press rolls. However, all of the rolls of the press roll 460 have the same length of 300 cm.

<Table 1>

|  | Radius of main roll 461 (cm) | Radius of sub-roll 462 (cm) |
|---|---|---|
| Comparative Example | 100 | - |
| Example 1 | 100 | 25 |
| Example 2 | 100 | 100 |
| Example 3 | 100 | 25 |

(continued)

|  | Radius of main roll 461 (cm) | Radius of sub-roll 462 (cm) |
|---|---|---|
| Example 4 | 100 | 100 |

(3) Rolling area of electrode plate 200: The rolling area of the electrode plate 200 is calculated according to Equation 1.

<Equation 1>

$$\text{Rolling area of electrode plate} = \frac{\theta}{360°} \times 2 \times \text{radius of press roll} \times 3.14 \times \text{length of press roll}$$

In Equation 1, $\theta$ indicates an angle of the press roll 460 corresponding to a contact area between the press roll 460 and the electrode plate 200. According to some examples, for a radius of 25 cm, $\theta$ was 18 degrees and for a radius of 100 cm, $\theta$ was 37 degrees.

(4) Theoretical weight of press roll 460: The theoretical weight of the press rolls is calculated according to Equation 2.

<Equation 2>

$$\text{Theoretical weight of press roll}$$
$$= \text{radius of press roll}^2 \times 3.14 \times \text{length of press roll}$$
$$\times \text{specific gravity of iron in press roll}$$

(5) Weight (force) per rolling area: The weight (force) per rolling area is calculated according to Equation 3.

<Equation 3>

$$\text{Weight per rolling area} = \frac{\textit{Theoretical weight of rolling roller}}{\textit{Rolling area of electrode plate}}$$

Results of Comparative Example and Examples obtained in (1) to (5) are shown in Table 2.

<Table 2>

|  | Arrangement | Size | Weight per rolling area (kg/cm$^2$) |
|---|---|---|---|
| Comparative Example | Sub-roll x | Sub-roll x | 7.87 |
| Example 1 | Vertical | Different | 16.28 |
| Example 2 | Vertical | Same | 15.75 |
| Example 3 | Horizontal | Different | 0.96 → 7.87 |
| Example 4 | Horizontal | Same | 7.87 → 7.87 |

In Table 2, "Arrangement" refers to arrangement between the pair of main rolls 461 and the pair of sub-rolls 462. When "Arrangement" is "Vertical", this indicates that the pair of main rolls 461 and the pair of sub-rolls 462 are arranged perpendicular to the traveling direction of the electrode plate 200. When "Arrangement" is "Horizontal", this indicates that the pair of main rolls 461 and the pair of sub-rolls 462 are arranged side by side with respect to the traveling direction of the electrode plate 200.

In Table 2, "Size" refers to a difference in diameter between the pair of main rolls 461 and the pair of sub-rolls 462. When "Size" is "Same", this indicates that the pair of main rolls 461 and the pair of sub-rolls 462 have the same diameter. When "Size" is "Different", this indicates that the pair of main rolls 461 and the pair of sub-rolls 462 had different diameters.

In Table 2, "Weight per rolling area" refers to force exerted on the electrode plate 200 per unit area by the press rolls 460 and indicates rolling ability of the press rolls 460.

In Table 2, Comparative Example represents an example of the secondary battery manufacturing apparatus 300 shown in FIG. 5. In Table 2, Examples 1 and 2 represent examples of the secondary battery manufacturing apparatus 400 shown in FIG. 6 and FIG. 7. In Table 2, Examples 3 and 4 represent examples of the secondary battery manufacturing apparatus 400 shown in FIG. 6 and FIG. 8.

From Table 2, it could be seen that the examples of embodiments of the disclosure have a better weight per rolling area than the Comparative Example (using the secondary battery manufacturing apparatus 300), indicating that the secondary battery manufacturing apparatus 400 according to various embodiments may be more suitable for manufacturing high density electrode plates and/or thin electrode plates that require high intensity rolling.

In Examples 1 and 2, it can be seen that the main roll 461 has higher rolling capacity when the diameter of the pair of main rolls 461 is greater than the diameter of the pair of sub-rolls 462 in arrangement of the pair of main rolls 461 and the pair of sub-rolls 462 perpendicular to the traveling direction of the electrode plate 200.

In Example 3, the pressure applied to the electrode plate 200 is sequentially increased from a smaller value to a larger value. As a result, Example 3 shows that performance of the electrode plate 200 is improved. That is, in Example 3, the density of active material particles in the composite layer of the electrode plate 200 is increased and damage to the composite layer and/or the base of electrode plate 200 is reduced.

In Example 4, the pair of sub-rolls 462 and the pair of main rolls 461 has the same weight per rolling area. In this case, Example 4 provides somewhat lower rolling efficiency than Example 3 since the same pressure is applied to the electrode plate 200 from the pair of sub-rolls 462 and the pair of main rolls 461.

As such, the secondary battery manufacturing apparatus 400 according to the embodiments of the present invention can roll the electrode plate 200 with high rolling efficiency so as to improve performance of the electrode plate 200. Further, the secondary battery manufacturing apparatus 400 can manufacture a high density and/or thin electrode plate through rolling.

Although the present disclosure has been described with reference to some embodiments and drawings illustrating aspects thereof, the present disclosure is not limited thereto. Various modifications and variations can be made by a person skilled in the art to which the present disclosure belongs within the scope of the present disclosure and the claims and their equivalents, below.

## Claims

1. A secondary battery manufacturing apparatus (400) comprising:

   a plurality of press rolls (460) arranged to roll an electrode plate (200), the press rolls (460) comprising a pair of main rolls (461) having a first diameter (D) and a pair of sub-rolls (462) having a second diameter (d) less than or equal to the first diameter; and
   a conveying unit configured to convey the electrode plate (200) toward the press rolls (460).

2. The secondary battery manufacturing apparatus (400) according to claim 1, wherein each of the pair of main rolls (461) is placed respectively on the pair sub-rolls (462) and is configured to press the pair of sub-rolls (462) through rotation, and the pair of sub-rolls (462) is configured to press and to roll the electrode plate (200) conveyed to the pair of sub-rolls (462).

3. The secondary battery manufacturing apparatus according to claim 2, wherein one of the pair of main rolls (461) is configured to rotate in a first direction and one of the pair of sub-rolls (462) is configured to rotate in a second direction different from the first direction.

4. The secondary battery manufacturing apparatus (400) according to claim 1, wherein the pair of sub-rolls (462) is configured to perform rolling by pressing the electrode plate while the electrode plate (200) is conveyed toward the pair of sub-rolls (462), and the pair of main rolls (461) are spaced a predetermined distance apart from the pair of sub-rolls (462) and are configured to perform rolling by pressing the electrode plate (200) subjected to rolling by the pair of sub-rolls (462).

5. The secondary battery manufacturing apparatus according to claim 4, wherein the pair of main rolls (461) rotate in a first direction and the pair of sub-rolls (462) rotate in the same direction as the first direction.

6. The secondary battery manufacturing apparatus (400) according to any one of the preceding claims, wherein the first diameter (D) and the second diameter (d) have a ratio in the range of 1:1 to 20:1.

7. The secondary battery manufacturing apparatus (400) according to any one of the preceding claims, wherein the first diameter (D) is in the range of 400 mm to 600 mm and the second diameter (d) is in the range of 20 mm to 600 mm.

8. The secondary battery manufacturing apparatus (400) according to any one of the preceding claims, further comprising:
a processor (490) configured to sense a thickness of the electrode plate (200) and configured to determine at least one of a rolling pressure of the plurality of press rolls (460) or a temperature of the press roll based on at least one of the sensed thickness of the electrode plate or a preset rolling thickness.

9. The secondary battery manufacturing apparatus (400) according to claim 8, further comprising:

   a heating unit (480) configured to regulate the temperature of the press rolls (460),
   wherein the processor (490) is configured to apply heat to the electrode plate through the heating unit (480) based on the determined temperature of the press rolls (460).

10. The secondary battery manufacturing apparatus (400) according to claim 9, wherein the processor (490) is further configured to stepwise increase the temperature of the press rolls (460) to a temperature less than or equal to a predetermined temperature through the heating unit (480).

11. The secondary battery manufacturing apparatus (400) according to any one of the claims 8 to 10, further comprising:

   a driver (470) configured to regulate a rolling pressure of the press rolls (460),
   wherein the processor is configured to apply pressure to the electrode plate through the driver (470) based on the determined rolling pressure of the press rolls (460).

12. The secondary battery manufacturing apparatus (400) according to any one of the preceding claims, wherein the pair of sub-rolls (462) comprises a pair of first sub-rolls (4621) and a pair of second sub-rolls (4622), a diameter of the pair of first sub-rolls (4621) being less than or equal to a diameter of the pair of second sub-rolls (4622).

13. The secondary battery manufacturing apparatus (400) according to claim 12, wherein the pair of first sub-rolls (4621) are spaced a predetermined distance apart from the pair of second sub-rolls (4622) and configured to perform rolling by pressing an electrode plate (200) conveyed toward the pair of first sub-rolls (4621), and the pair of second sub-rolls (4622) is configured to press the electrode plate (200) subjected to rolling by the pair of first sub-rolls (4621).

14. The secondary battery manufacturing apparatus (400) according to any one of the preceding claims, wherein the pair of sub-rolls (462) form a step between a center portion (c) thereof and a periphery portion (e) thereof.

15. The secondary battery manufacturing apparatus (400) according to claim 14, wherein the pair of sub-rolls (462) have a height gradually increasing from the center portion thereof toward the periphery portion thereof.

# FIG. 1

# FIG. 2

# FIG. 3

# FIG. 4

# FIG. 5

# FIG. 6

# FIG. 7

# FIG. 8

FIG. 9

# FIG. 10

| | Europäisches Patentamt European Patent Office Office européen des brevets | **EUROPEAN SEARCH REPORT** | **Application Number** EP 25 16 8006 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/411588 A1 (ZHONG LINDA [US] ET AL) 21 December 2023 (2023-12-21) | 1-14 | INV. H01M4/04 |
| Y | * abstract; claims 1-39; figures 2,7-10 * * paragraphs [0041] - [0047], [0065], [0069], [0070] - [0073] * | 15 | H01M10/04 H01M10/0525 B30B3/04 B30B15/26 |
| X | US 2022/173371 A1 (FUKUNAGA AKIHITO [JP] ET AL) 2 June 2022 (2022-06-02) | 1,4-7 | B30B15/34 |
| A | * abstract; claims 1-18; figure 1 * * paragraphs [0249], [0260], [0265], [0280], [0285], [0328] - [0329] * | 2,3,8-15 | |
| X | EP 4 261 919 A1 (LG ENERGY SOLUTION LTD [KR]) 18 October 2023 (2023-10-18) | 1,4-7, 12,13 | |
| A | * abstract; claims 1-11; figure 1 * * paragraphs [0047] - [0058] * | 2,3, 8-11,14, 15 | |
| X | EP 3 866 243 A1 (LG ENERGY SOLUTION LTD [KR]) 18 August 2021 (2021-08-18) | 1,4-7, 12,13 | |
| A | * abstract; claims 1-15; figures 1,2,4,5 * * paragraphs [0035] - [0040], [0076] - [0078] * | 2,3, 8-11,14, 15 | **TECHNICAL FIELDS SEARCHED (IPC)** H01M B30B |
| Y | CN 115 528 198 A (VOLKSWAGEN AG) 27 December 2022 (2022-12-27) | 15 | |
| A | * abstract; claim 4; figures 1,2,4 * * paragraphs [0005] - [0006], [0048] * | 1-14 | |

The present search report has been drawn up for all claims

| Place of search | Date of completion of the search | Examiner |
|---|---|---|
| The Hague | 24 July 2025 | Ramos Alonso, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 8006

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2025

| Patent document cited in search report | Publication date | Patent family member(s) | Publication date |
|---|---|---|---|
| US 2023411588 A1 | 21-12-2023 | NONE | |
| US 2022173371 A1 | 02-06-2022 | CN 114365304 A | 15-04-2022 |
| | | JP 7422158 B2 | 25-01-2024 |
| | | JP WO2021033521 A1 | 25-02-2021 |
| | | US 2022173371 A1 | 02-06-2022 |
| | | WO 2021033521 A1 | 25-02-2021 |
| EP 4261919 A1 | 18-10-2023 | CN 116724405 A | 08-09-2023 |
| | | EP 4261919 A1 | 18-10-2023 |
| | | JP 2024504154 A | 30-01-2024 |
| | | KR 20230091674 A | 23-06-2023 |
| | | US 2024170631 A1 | 23-05-2024 |
| | | WO 2023113297 A1 | 22-06-2023 |
| EP 3866243 A1 | 18-08-2021 | CN 113614965 A | 05-11-2021 |
| | | EP 3866243 A1 | 18-08-2021 |
| | | JP 7251030 B2 | 04-04-2023 |
| | | JP 2022512072 A | 02-02-2022 |
| | | KR 20200067575 A | 12-06-2020 |
| | | US 2022006161 A1 | 06-01-2022 |
| | | WO 2020116846 A1 | 11-06-2020 |
| CN 115528198 A | 27-12-2022 | CN 115528198 A | 27-12-2022 |
| | | DE 102021206617 B3 | 08-09-2022 |

EPO FORM P0459

For more details about this annex : see Official Journal of the European Patent Office, No. 12/82